# EUROPEAN PATENT APPLICATION

(11) **EP 4 830 506 A1**
(43) Date of publication of application: **28.10.2026**
(21) Application number: 24936447.2
(22) Date of filing: 08.05.2024
(51) Int. Cl.: A01D 34/74

(54) **LAWN MOWING APPARATUS AND AUTOMATIC LAWN MOWER**

(30) Priority: 22.04.2024 CN 202410481058
(71) Applicant: Shenzhen Hanyang Technology Co., Ltd., Shenzhen, Guangdong 518000 (CN)
(72) Inventor: ZHU, Taotao, Shenzhen, Guangdong 518000 (CN); SONG, Yongqi, Shenzhen, Guangdong 518000 (CN); LI, Haitao, Shenzhen, Guangdong 518000 (CN); CHEN, Weiyue, Shenzhen, Guangdong 518000 (CN)
(74) Representative: Abel & Imray LLP
(86) International application number: PCT/CN2024/091683
(87) International publication number: WO 2025/222544

(57) **Abstract**

The present disclosure relates to a lawn mowing apparatus and a robotic lawn mower, and aims to solve the problem of poor adaptability of a cutting assembly when a lawn mowing apparatus passes through an obstacle and a mound in the prior art. A lifting mechanism of the lawn mowing apparatus includes a first plate capable of ascending or descending relative to a support frame, and a second plate engaging with the first plate from above; a cutting assembly is fixedly coupled to the second plate, and the second plate is configured to be capable of undergoing an adaptive movement in a vertical direction and/or a horizontal direction relative to the first plate in a case where the cutting assembly is subjected to external force; and the lawn mowing apparatus further includes a reset member, and the reset member is configured to enable the second plate to reset after the adaptive movement. According to the lawn mowing apparatus provided by the present disclosure, the lifting mechanism has a function of adjusting a height of a blade disk, and can further undergo an adaptive movement within a range. Thus, maneuverability of the lawn mowing apparatus is improved, the mound is prevented from being leveled, and overall aesthetic quality of a lawn is improved.

## Description

The present disclosure claims the priority to Chinese Patent Application No. 2024104810586 filed with the CNIPA on April 22, 2024 and entitled "Lawn Mowing Apparatus and Robotic Lawn Mower", which is incorporated herein in its entirety by reference.

### TECHNICAL FIELD

The patent of the present disclosure relates to a lawn mowing apparatus, and in particular, to a lawn mowing apparatus mounted on an autonomous moving apparatus.

### BACKGROUND

A lawn mower is widely used in agriculture, gardening, parks and other fields on account of its high efficiency, safety, reliability, and environmental protection and energy saving. The lawn mower features precise mowing, versatility, and user-friendly design, and greatly improves the efficiency of lawn maintenance with popularity among users.

In the related art, the lawn mowing apparatus can block most obstacles on a lawn through a blocking structure, but still leave some small obstacles. These obstacles collide with a cutting assembly, and are prone to damage the cutting assembly, resulting in an increase in maintenance and replacement costs. In addition, when passing through a mound, the lawn mowing apparatus is likely to level a turf at the top of the mound, and then damages the quality of the turf and affects an overall effect of mowing. That is, the lawn mowing apparatus in the related art has poor adaptability in the above working condition.

### SUMMARY

In view of the prior art, the present disclosure provides a lawn mowing apparatus and a robotic lawn mower. When the lawn mowing apparatus makes contact with an obstacle or a raised mound, a lifting mechanism has a function of adjusting a height of a blade disk, and can further undergo an adaptive movement within a range, such that maneuverability of the lawn mowing apparatus is improved.

The present disclosure achieves the above objective through the following technical solution.

The present disclosure provides a lawn mowing apparatus. The lawn mowing apparatus includes:
a support frame, a lifting mechanism mounted to the support frame, and a cutting assembly mounted to the lifting mechanism, where the lifting mechanism is configured to drive the cutting assembly to ascend or descend; the lifting mechanism includes a first plate capable of ascending or descending relative to the support frame, and a second plate engaging with the first plate from above; the cutting assembly is fixedly coupled to the second plate, and the second plate is configured to be capable of undergoing an adaptive movement in a vertical direction and/or a horizontal direction relative to the first plate in a case where the cutting assembly is subjected to external force; and the lawn mowing apparatus further includes a reset member, and the reset member is configured to enable the second plate to reset after the adaptive movement.

The present disclosure further provides a robotic lawn mower. The robotic lawn mower includes an autonomous moving apparatus and the lawn mowing apparatus described above, where the lawn mowing apparatus is arranged to the autonomous moving apparatus, and is capable of completing a mowing operation in a preset area when driven by the autonomous moving apparatus.

The present disclosure has the beneficial effects: the lawn mowing apparatus of the present disclosure solves the problem that a cutting assembly of a lawn mowing apparatus in the prior art lacks adaptive regulation when making contact with an obstacle or a mound. According to the lawn mowing apparatus provided by the present disclosure, the lifting mechanism has a function of adjusting a height of a blade disk, and can further undergo an adaptive movement within a range. Thus, maneuverability of the lawn mowing apparatus is improved, the mound is prevented from being leveled, and overall aesthetic quality of a lawn is improved. In addition, the adaptive movement reduces a machine loss caused by collision of the cutting assembly with the obstacle, and reduces a maintenance cost caused by the loss.

### BRIEF DESCRIPTION OF THE DRAWINGS

To describe technical solutions in implementations of the present disclosure more clearly, accompanying drawings required by description of the implementations will be briefly described below. Apparently, the accompanying drawings in the following description merely show some implementations of the present disclosure, and those of ordinary skill in the art can still derive other accompanying drawings from these accompanying drawings without creative efforts.
FIG. 1 shows a schematic diagram of a lawn mowing apparatus according to an implementation of the present disclosure;
FIG. 2 shows a schematic diagram of an internal structure of a lawn mowing apparatus according to an implementation of the present disclosure;
FIG. 3 shows a schematic diagram of an enlarged view of a part A from a perspective of FIG. 2;
FIG. 4 shows a schematic diagram of an internal structure of a lawn mowing apparatus undergoing an adaptive movement;
FIG. 5 shows a schematic diagram of an enlarged view of a part B from a perspective of FIG. 4;
FIG. 6 shows a schematic diagram of an exploded view of a lifting mechanism;
FIG. 7 shows a schematic structural diagram of a support member; and
FIG. 8 shows a schematic diagram of a robotic lawn mower according to an implementation of the present disclosure.

Description of reference numerals:
100. lawn mowing apparatus;
10. support frame;
20. lifting mechanism; 21. first plate; 22. second plate; 221. through hole; 23. guide post; 24. mounting plate; 25. lifting motor; 26. lead screw drive assembly; 261. lead screw body; 262. lead screw nut; 27. guide sleeve; 28. support member; 281. step portion; 29. sleeve; 50. sensing assembly; 51. magnet; 52. magnetic sensor; 53. limiting member;
30. cutting assembly;
40. reset member;
200. autonomous moving apparatus; and
1000. robotic lawn mower.

### DETAILED DESCRIPTION

In order to make objectives, technical solutions, and advantages of the present disclosure clearer, the present disclosure will be further described below in detail with reference to accompanying drawings and embodiments. It should be understood that specific embodiments described herein are merely used to explain the present disclosure rather than limit the present disclosure.

Technical solutions in the implementations of the present disclosure will be described below clearly and comprehensively in conjunction with accompanying drawings in the implementations of the present disclosure.

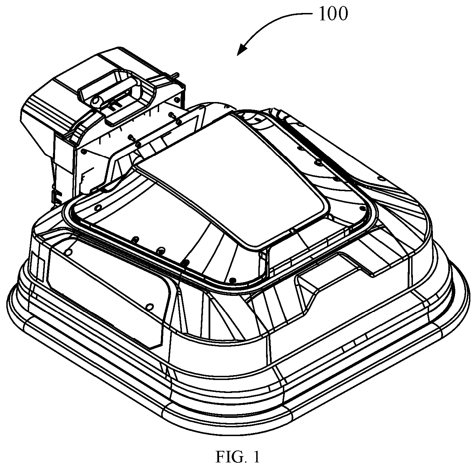

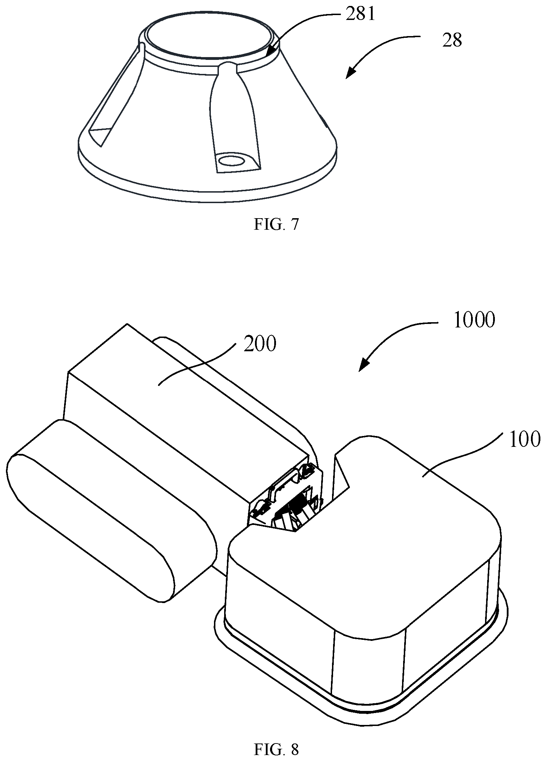

With reference to FIG. 1 and FIG. 8, the present disclosure provides a lawn mowing apparatus 100 and a robotic lawn mower 1000. The lawn mowing apparatus 100 may be easily mounted to the autonomous moving apparatus 200. The autonomous moving apparatus 200 generates a predetermined mowing path based on a mowing area set by a user. The autonomous moving apparatus 200 may be a crawler-type vehicle, a wheeled vehicle, and other mobile carriers having a mounting position of the lawn mowing apparatus 100. The autonomous moving apparatus 200 and the lawn mowing apparatus 100 are combined to form the robotic lawn mower 1000 to complete automatic mowing work. The lawn mowing apparatus 100 is configured to complete mowing in a predetermined area along a predetermined path generated by the autonomous moving apparatus 200 under the drive of the autonomous moving apparatus 200.

In the related art, the lawn mowing apparatus 100 is usually provided with a lifting mechanism 20, and a cutting assembly 30 is fixedly mounted to the lifting mechanism 20, such that an operator can adjust a height of the cutting assembly 30 relative to ground according to a height of grass before cutting and an expected mowing effect. When there are obstacles or mounds on a lawn, and heights of these obstacles or mounds are higher than a preset cutting height, the cutting assembly 30 of the lawn mowing apparatus 100 collides with the obstacles and the mounds. On one hand, the machine itself is prone to damage, and on the other hand, the lawn is leveled, damaging quality of the lawn, and destroying overall aesthetic quality of the lawn. Based on this, the applicant has thoroughly studied and solved the problem that the cutting assembly 30 has poor adaptability when the lawn mowing apparatus 100 passes through the obstacles and the mounds.

A structure of the lawn mowing apparatus 100 in the present disclosure will be described in detail below.

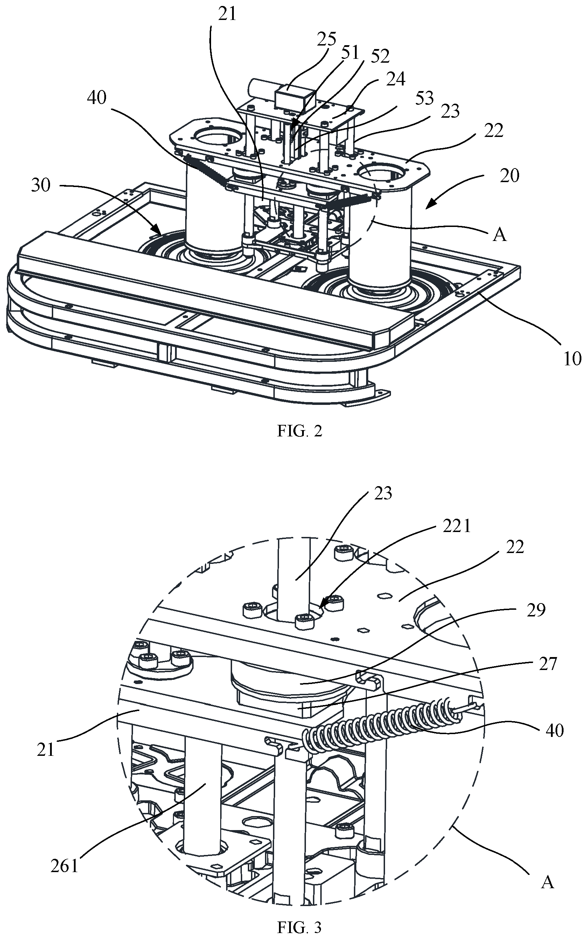

With reference to FIG. 2 to FIG. 5, the present disclosure provides a lawn mowing apparatus 100. The lawn mowing apparatus includes a support frame 10, a lifting mechanism 20 mounted to the support frame 10, and a cutting assembly 30 mounted to the lifting mechanism 20. The lifting mechanism 20 is configured to drive the cutting assembly 30 to ascend or descend. The lifting mechanism 20 includes a first plate 21 capable of ascending or descending relative to the support frame 10, and a second plate 22 engaging with the first plate 21 from above. The cutting assembly 30 is fixedly coupled to the second plate 22, and the second plate 22 is configured to be capable of undergoing an adaptive movement in a vertical direction and/or a horizontal direction relative to the first plate 21 in a case where the cutting assembly 30 is subjected to external force. The lawn mowing apparatus 100 further includes a reset member 40, and the reset member 40 is configured to enable the second plate 22 to reset after the adaptive movement.

The lifting mechanism 20 adopts a double-plate design. When the lifting mechanism 20 is adjusted in height, the first plate 21 and the second plate 22 engaging with the first plate from above change in height relative to the ground. The cutting assembly 30 is fixedly coupled to the second plate 22, and the cutting assembly and the second plate can be regarded as a same whole. The first plate 21 and the second plate 22 are in an engagement relationship, that is, the first plate and the second plate do not have a fixed connection relationship. When the cutting assembly 30 makes contact with the mound or the obstacle, action force generated by collision deliver the second plate 22 and the cutting assembly 30 upward as a whole, thus temporarily releasing the engagement relationship between the first plate 21 and the second plate 22. In this way, the second plate 22 can disengage from the first plate 21, and can undergo the adaptive movement in the vertical direction and/or the horizontal direction relative to the first plate 21. A moving track of the adaptive movement depends on a direction of the action force generated by the collision.

The lawn mowing apparatus 100 further has the reset member 40. The reset member 40 is coupled between the first plate 21 and the second plate 22, and the reset member 40 has a restraining effect. When the first plate 21 and the second plate 22 disengage from each other, the reset member 40 can ensure that the second plate 22 can undergo the adaptive movement within an acceptable range. After the lawn mowing apparatus 100 passes through the obstacles or the mounds, the reset member 40 can restore a previous engagement state of the first plate 21 and the second plate 22, thus restoring a preset mowing height, and ensuring a consistent cutting height of a target lawn.

In this way, in this embodiment, the adaptive movement of the second plate 22 relative to the first plate 21 is set, and the limitation and a reset function of the reset member 40 are applied, solving the problem of poor adaptability of the cutting assembly 30 when the lawn mowing apparatus 100 passes through the obstacles and the mounds. With the improved lawn mowing apparatus 100, durability is improved, a reduction in the maintenance cost and protection of the lawn are facilitated, and a better use experience is provided for the user.

With reference to FIG. 2, in some embodiments, the lifting mechanism 20 further includes a guide post 23 mounted to the support frame 10, the guide post 23 extends through the first plate 21 and the second plate 22, and the first plate 21 and the second plate 22 are capable of ascending or descending in a length direction of the guide post 23. The guide post 23 extends through the first plate 21 and the second plate 22 and is mounted to the support frame 10 of the lawn mowing apparatus 100. The guide post plays the role of guiding during the ascending or descending of the first plate 21 and the second plate 22 and the adaptive movement of the first plate 21, such that the first plate 21 and the second plate 22 move along the guide post 23 and are prevented from deviating during the movement. A plurality of guide posts 23 may be arranged according to a space situation of the lawn mowing apparatus 100, and the plurality of guide posts 23 are symmetrically distributed. Thus, shaking and swaying are reduced advantageously during the ascending or descending of the first plate 21 and the second plate 22 or the adaptive movement of the first plate 21, balance is maintained, and strong support is provided for long-term stable operation of the lawn mowing apparatus 100.

With reference to FIG. 2, in some embodiments, the lifting mechanism 20 further includes a mounting plate 24 mounted to a top of the guide post 23, where the mounting plate 24 is located above the second plate 22; a lifting motor 25 mounted to the mounting plate 24; and a lead screw drive assembly 26 coupled to an output end of the lifting motor 25, where the lead screw drive assembly 26 is operatively coupled to the first plate 21, and the lead screw drive assembly 26 is configured to drive the first plate 21 to ascend or descend.

In the lifting mechanism 20, the mounting plate 24 is mounted at the top of the guide post 23, and the mounting plate 24 and the lifting motor 25 at the mounting plate 24 are located above the second plate 22. The lead screw drive assembly 26 includes a lead screw body 261 and a lead screw nut 262, and the lead screw nut 262 is fixedly coupled to the first plate 21. A bottom of the lead screw body 261 is fixed to the support frame 10, and a top of the lead screw body is coupled to the mounting plate 24, and extends through the lead screw nut 262. The lead screw nut 262 has an internal thread, and the lead screw body 261 has an external thread adapted to the lead screw nut 262, and the lifting motor 25 is operatively coupled to the lead screw body 261. When the lifting motor 25 operates, the lead screw drive assembly 26 may convert rotary motion into linear motion, to drive the first plate 21 to ascend or descend along the lead screw body 261. That is, the lifting motor 25 can drive the height of the first plate 21 relative to the ground, and adjust the height of the cutting assembly 30, to adapt to lawns with different heights or handle obstacles with different heights.

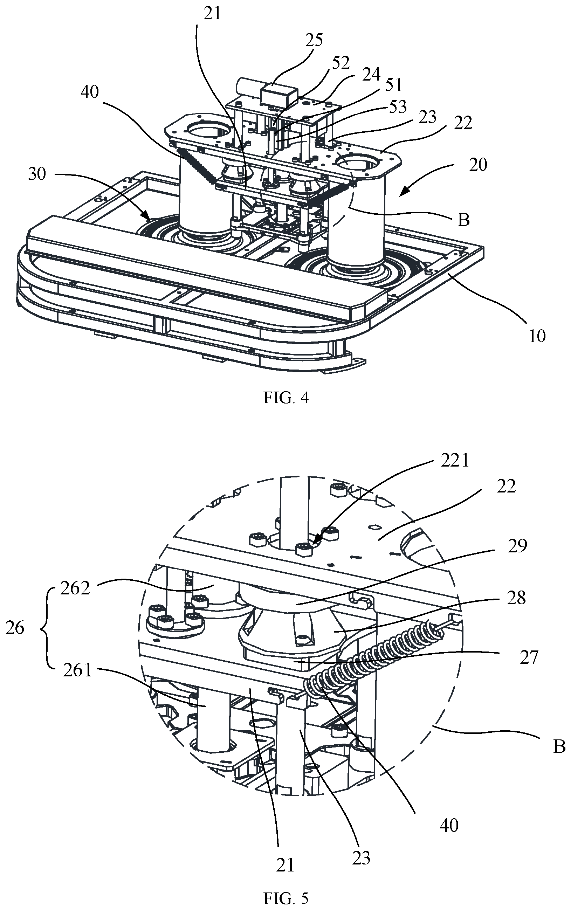

With reference to FIG. 4, in some embodiments, the lifting mechanism 20 further includes at least one sensing assembly 50. The sensing assembly 50 includes a magnet 51 and a magnetic sensor 52 configured to sense the magnet 51, the magnet 51 ascends or descends along with the first plate 21, and the magnetic sensor 52 is motionless relative to the support frame 10. The magnetic sensor 52 cooperates with the magnet 51, to limit a range of ascending or descending of the cutting assembly 30 along with the first plate 21.

The cutting assembly 30 is usually mounted under a bottom shell of the lawn mowing apparatus 100. If the cutting assembly 30 ascends too high along with the first plate 21, the bottom shell may be damaged by the cutting assembly 30. If the cutting assembly 30 descends too low along with the first plate 21, the cutting assembly 30 may be caused to be in direct contact with the lawn and rub against the ground for a long time, which is likely to damage the lawn and affect a service life of the cutting assembly 30. The magnetic sensor 52 is fixedly arranged at a high position or a low position of the lifting mechanism 20, and the magnet 51 is arranged opposite the magnetic sensor 52, and can ascend or descend along with the first plate 21. When the magnet 51 moves to a same height as the magnetic sensor 52, the magnetic sensor 52 transmits a stop signal to the lifting motor 25, to avoid the damage to the lawn mowing apparatus 100 caused by the ascent or descent beyond the range of the first plate 21.

In some embodiments, the magnetic sensor 52 is arranged below the mounting plate 24, the magnetic sensor 52 corresponds to a maximum height above ground of the cutting assembly 30, and the magnetic sensor 52 cooperates with magnet 51, to prevent the cutting assembly 30 from ascending along with the first plate 21 beyond the maximum height above ground.

Specifically, the mounting plate 24 is located at a high position of the lifting mechanism 20 and is motionless relative to the support frame 10. The magnetic sensor 52 may be motionlessly and fixedly coupled to the bottom of the mounting plate 24 relative to the support frame 10. The magnet 51 is arranged at a position adapted to the magnetic sensor 52, and may ascend or descend along with the first plate 21. When the magnet 51 ascends to the height of the magnetic sensor 52, the magnetic sensor 52 transmits the stop signal to the lifting motor 25, to prevent the first plate 21 from ascending continuously. In this way, the lawn mowing apparatus 100 is prevented from being damaged by the cutting assembly 30.

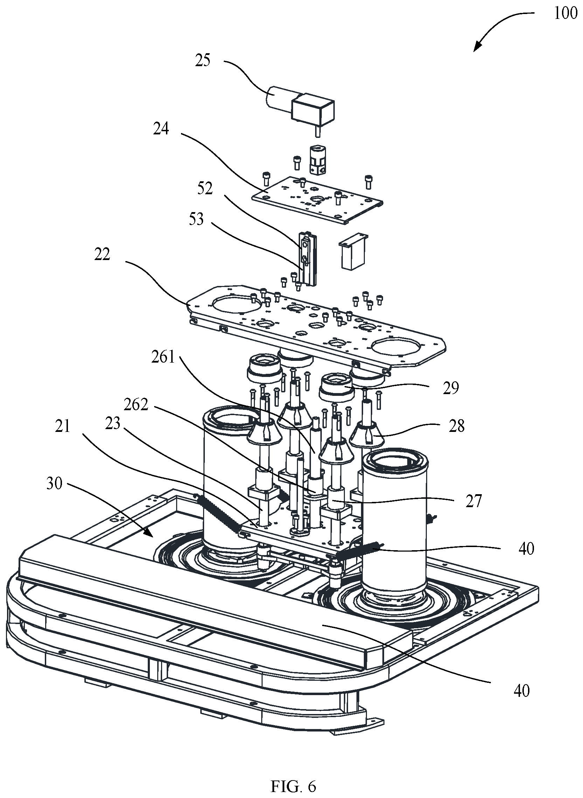

With reference to FIG. 4 to FIG. 6, in some embodiments, a limiting member 53 is fixedly mounted below the mounting plate 24, the limiting member 53 extends from a bottom of the mounting plate 24 to the second plate 22, the second plate 22 ascends to abut against the limiting member 53, and the limiting member 53 limits the second plate 22 to a position not higher than a bottom of the limiting member 53 and/or limits adaptive movement of the second plate 22 at a high position.

The limiting member 53 arranged at the bottom of the mounting plate 24 of the lifting mechanism 20 has two functions below. As a structural limitation, the limiting member 53 can prevent the second plate 22 from further lifting when the second plate 22 ascends to abut against the bottom of the limiting member. In this way, a protection mechanism is further arranged for the bottom shell of the lawn mowing apparatus 100, and the bottom shell can be protected from the damage of the cutting assembly 30 even if the sensing assembly 50 for controlling the lifting motor 25 to stop fails. In addition, when the second plate 22 abuts against the limiting member 53 at the high position, the limiting member 53 can limit a shaking amplitude of the adaptive movement of the second plate 22 at the high position, and the bottom shell is further prevented from being damaged by the cutting assembly 30 due to the adaptive movement.

With reference to FIG. 3, in some embodiments, the second plate 22 defines a through hole 221, the guide post 23 extends through the through hole 221, and a movable gap exists between an inner wall of the through hole 221 and an outer wall of the guide post 23.

When the cutting assembly 30 of the lawn mowing apparatus 100 collides with the obstacles or the mounds on the lawn, the action force of the collision acts on the cutting assembly 30 and the second plate 22, and the cutting assembly 30 and the second plate 22 move vertically upward along the guide post 23. When the second plate 22 completely disengages from the first plate 21, the second plate 22 has a range of movement in the horizontal direction in addition to vertical upward movement. The movable gap between the inner wall of the through hole 221 in the second plate 22 and the outer wall of the guide post 23 determines the range of movement in the horizontal direction. With this design, the lawn mowing apparatus 100 is provided with an adaptive movement in the horizontal direction, and maneuverability of the lawn mowing apparatus 100 when the cutting assembly 30 collides is further improved.

With reference to FIG. 3, in some embodiments, a ratio of a diameter of the through hole 221 to a diameter of the guide post 23 ranges from 1.2 to 2.5.

To improve adaptability of the lawn mowing apparatus 100, the movable gap between the inner wall of the through hole 221 in the second plate 22 and the outer wall of the guide post 23 should not be too small. When the ratio of the diameter of the through hole 221 to the diameter of the guide post 23 is less than 1.2, the range of the movement in the horizontal direction of the second plate 22 is too small, limiting the flexibility of the lawn mowing apparatus 100. When the ratio of the diameter of the through hole 221 to the diameter of the guide post 23 is greater than 2.5, the range of the movement in the horizontal direction of the second plate 22 is too large. As a result, an excessive swing amplitude of the cutting assembly 30 is caused, the stability of the lawn mowing apparatus 100 is reduced, a cutting range of the cutting assembly 30 may be even exceeded, and then a shell of the lawn mowing apparatus 100 is damaged. Thus, the ratio of the diameter of the through hole 221 of the second plate 22 to the diameter of the guide post 23 is controlled to range from 1.2 to 2.5, and a specific ratio may be 1.4, 1.6, 2.0, etc., or any point value within the ratio range.

With reference to FIG. 3 and FIG. 5, in some embodiments, the first plate 21 is provided with a guide sleeve 27, the guide sleeve 27 is sleeved around an outer side of the guide post 23, a support member 28 is arranged above the guide sleeve 27, and a cross section of the support member 28 is gradually reduced from bottom to top.

The second plate 22 is provided with a sleeve 29, the sleeve 29 is sleeved around an outer side of the support member 28, and a contour of an inner surface of the sleeve 29 is adapted to an outer contour of the support member 28.

The guide sleeve 27 cooperates with the guide post 23. Through arrangement of the guide sleeve 27, the first plate 21 is guaranteed to move along the guide post 23 during an ascending or descending process, thus avoiding rubbing between the first plate 21 and the guide post 23 during the ascending or descending process. An outer side of the support member 28 above the guide sleeve 27 is adapted to the contour of the inner surface of the sleeve 29 of the second plate 22. Thus, the engagement relationship between the second plate 22 and the first plate 21 is implemented, the second plate 22 can be supported by the first plate 21, to move upward until the cutting assembly 30 collides with the obstacles or the mounds on the lawn, and the second plate 22 disengages from the first plate 21. After obstacle crossing is completed, the second plate 22 and the cutting assembly 30 mounted to the second plate 22 move downward along the guide post 23 under the action of gravity and the reset member 40 until the engagement state between the second plate 22 and the first plate 21 is restored.

The support member 28 has a cross-sectional area gradually decreasing from bottom to top, and plays a guiding role. In this way, in a process of descending of the second plate 22, it is easier for the sleeve 29 to complete engagement under guidance of the support member 28. A reset failure of the second plate 22 due to misalignment between the second plate 22 and the first plate 21 is avoided.

In some embodiments, the support member 28 and the guide sleeve 27 are in an integrated structure. The support member 28 and the guide sleeve 27 may be integrally molded and cast, or may be in the integrated structure formed through welding and other processes.

With reference to FIG. 5, in some embodiments, an outer surface of the support member 28 has any shape of a cone, a truncated cone, a pyramid, or a truncated pyramid.

A shape of the outer surface of the support member 28 is an important factor that affects the engagement and disengagement of the first plate 21 and the second plate 22. The support member 28 having the outer surface in a shape of the cone and the truncated cone can minimize friction during a nesting process of the support member 28 and the sleeve 29, such that the second plate 22 can ascend or descend more smoothly, and the flexibility of the apparatus is improved advantageously. The support member 28 having the outer surface in a shape of the pyramid or the truncated pyramid has better anti-deviation performance. Thus, the support member is insusceptible to slight vibration when the first plate 21 and the second plate 22 engage with each other, and the stability of the apparatus is improved advantageously. A designer may flexibly select the support member 28 having the outer surface in any shape of the cone, the truncated cone, the pyramid, or the truncated pyramid according to an actual situation, to achieve an optimum mechanical performance, which is not limited herein.

In some implementations, an angle between an outer surface of the support member 28 and a bottom plane of the support member ranges from 30 degrees to 70 degrees.

The angle between the outer surface of the support member 28 and the bottom plane of the support member determines difficulty of the engagement or disengagement of the support member 28 and the sleeve 29. The larger the angle is, for example, 60 degrees, the more stable the engagement state of the second plate 22 and the first plate 21 is. That is, the cutting assembly 30 is subjected to large force, to cause the sleeve 29 to disengage from or engage with the support member 28.

On the contrary, the smaller the angle is, for example, 45 degrees, the more flexible the engagement of the second plate 22 and the first plate 21 is. That is, the cutting assembly 30 is subjected to small force, to cause the sleeve 29 to disengage from or engage with the support member 28. The design of this small angle is especially applicable to working environments that require greater flexibility and rapid adjustment, such as scenarios that need to cross obstacles frequently or adapt to different lawn conditions.

With reference to FIG. 5, in some implementations, a top of the support member 28 has a step portion 281 upwardly extending, and the inner surface of the sleeve 29 has an extending structure adapted to the step portion 281.

The step portion 281 upwardly extending limits a movement of the sleeve 29 in the horizontal direction to a certain extent. Thus, the sleeve 29 is prevented from disengaging from the support member 28 due to slight shaking generated by the lawn mowing apparatus 100 during work when the cutting assembly 30 is not in contact with the obstacles, and the structural stability of the apparatus is increased.

With reference to FIG. 2, in some implementations, the reset member 40 is an elastic member, one end of the elastic member is coupled to the first plate 21, the other end of the elastic member is coupled to the second plate 22, and the elastic member is configured to enable the second plate 22 to reset after a movement.

Specifically, the first plate 21 and the second plate 22 are provided with mounting positions of the elastic member, and elastic force of the elastic member affects a resetting speed of the second plate 22 after disengagement from the first plate 21. The designer can ensure that the reset speed of the second plate 22 is moderate by balancing the elastic force of the elastic member and the structure of the apparatus, quick restoring can be implemented, and stability can be maintained.

The present disclosure further provides a robotic lawn mower 1000. The robotic lawn mower includes an autonomous moving apparatus 200 and the lawn mowing apparatus 100 described above. The lawn mowing apparatus 100 is arranged to the autonomous moving apparatus 200, and is capable of completing a mowing operation in a preset area when driven by the autonomous moving apparatus 200.

The autonomous moving apparatus 200 is a type of mobile vehicle body. The mobile vehicle body may adopt various designs, such as crawler-type vehicle and a wheeled vehicle, and can move freely under different terrain and environmental conditions. The autonomous moving apparatus 200 has a precise positioning technology, such as the Global Positioning System and an inertial navigation system, and the autonomous moving apparatus 200 can be accurately positioned. The autonomous moving apparatus 200 may also be equipped with an obstacle avoidance system, such as ultrasonic obstacle avoidance, visual obstacle avoidance, and infrared obstacle avoidance. Thus, the autonomous moving apparatus can avoid the obstacles and move according to a preset path during operation. The autonomous moving apparatus 200 is equipped with the lawn mowing apparatus 100 described in the embodiment, and the lawn mowing apparatus can efficiently clean a lawn in a designated area when driven by the autonomous moving apparatus 200. An entire cleaning process does not need manual operation, a capability to independently complete a mowing task is achieved, labor inputs are reduced, and the mowing task can be completed quickly and efficiently in different scenarios.

In the description of the present disclosure, it should be understood the orientation or positional relationships indicated by the terms "length", "width", "depth", "up", "down", etc. are based on the orientation or positional relationship shown in the accompanying drawings, are merely for facilitating the description of the present disclosure and simplifying the description, rather than indicating or implying that a device or element referred to must have a particular orientation or be constructed and operated in a particular orientation, and thus will not be interpreted as limitation to the present disclosure. The terms such as "mount" and "couple" should be understood in a broad sense. For example, they may denote fixed coupling, detachable coupling, integral coupling, operative coupling, direct coupling, or indirect coupling through an intermediate medium. For those of ordinary skill in the art, specific meanings of the above terms in the present disclosure can be understood according to specific circumstances.

In addition, the terms "first", "second", "third", etc. are merely used for distinguishing description and cannot be understood as specific indicating or a specific structure. The explanation with the phrase "in some implementations" indicates that specific features, structures, materials, or characteristics described in conjunction with the implementations or examples are included in at least one implementation or example of the present disclosure. In the present disclosure, illustrative expressions of the terms do not necessarily refer to the same implementation or example. Furthermore, the specific features, structures, materials or characteristics described may be combined in any one or more implementations or examples in a suitable manner. In addition, those of ordinary skill in the art can combine and group different implementations or examples and features in different implementations or examples described in the present disclosure if there is no contradiction.

The implementations described above are merely used to describe the technical solution of the present disclosure rather than limiting the same. Although the present disclosure has been described in detail with reference to the foregoing implementations, those of ordinary skill in the art should understand that the technical solution described in the foregoing implementations can still be modified, or some technical features therein can be equivalently substituted. These modifications or substitutions do not make the essence of the corresponding technical solution deviate from the spirit and scope of the technical solutions of the implementations of the present disclosure, and shall fall within the protection scope of the present disclosure.

## Claims

1. A lawn mowing apparatus, **characterized by** comprising a support frame, a lifting mechanism mounted to the support frame, and a cutting assembly mounted to the lifting mechanism, wherein the lifting mechanism is configured to drive the cutting assembly to ascend or descend;
the lifting mechanism comprises a first plate capable of ascending or descending relative to the support frame, and a second plate engaging with the first plate from above;
the cutting assembly is fixedly coupled to the second plate, and the second plate is configured to be capable of undergoing an adaptive movement in a vertical direction and/or a horizontal direction relative to the first plate in a case where the cutting assembly is subjected to external force; and
the lawn mowing apparatus further comprises a reset member, and the reset member is configured to enable the second plate to reset after the adaptive movement.

2. The lawn mowing apparatus according to claim 1, **characterized in that** the lifting mechanism further comprises a guide post mounted to the support frame, the guide post extends through the first plate and the second plate, and the first plate and the second plate are capable of ascending or descending in a length direction of the guide post.

3. The lawn mowing apparatus according to claim 2, **characterized in that** the lifting mechanism further comprises:
a mounting plate mounted to a top of the guide post, wherein the mounting plate is located above the second plate;
a lifting motor mounted to the mounting plate; and
a lead screw drive assembly coupled to an output end of the lifting motor, wherein the lead screw drive assembly is operatively coupled to the first plate, and the lead screw drive assembly is configured to drive the first plate to ascend or descend.

4. The lawn mowing apparatus according to claim 3, **characterized in that** the lifting mechanism further comprises at least one sensing assembly; the sensing assembly comprises a magnet and a magnetic sensor configured to sense the magnet, the magnet ascends or descends along with the first plate, and the magnetic sensor is motionless relative to the support frame; and the magnetic sensor cooperates with the magnet, to limit a range of ascending or descending of the cutting assembly along with the first plate.

5. The lawn mowing apparatus according to claim 4, **characterized in that** the magnetic sensor is arranged below the mounting plate, the magnetic sensor corresponds to a maximum height above ground of the cutting assembly, and the magnetic sensor cooperates with the magnet, to prevent the cutting assembly from ascending along with the first plate beyond the maximum height above ground.

6. The lawn mowing apparatus according to claim 3, **characterized in that** a limiting member is fixedly mounted below the mounting plate, the limiting member extends from a bottom of the mounting plate to the second plate, the second plate ascends to abut against the limiting member, and the limiting member limits the second plate to a position not higher than a bottom of the limiting member and/or limits adaptive movement of the second plate at a high position.

7. The lawn mowing apparatus according to claim 2, **characterized in that** the second plate defines a through hole, the guide post extends through the through hole, and a movable gap exists between an inner wall of the through hole and an outer wall of the guide post.

8. The lawn mowing apparatus according to claim 7, **characterized in that** a ratio of a diameter of the through hole to a diameter of the guide post ranges from 1.2 to 2.5.

9. The lawn mowing apparatus according to claim 2, **characterized in that** the first plate is provided with a guide sleeve, the guide sleeve is sleeved around an outer side of the guide post, a support member is arranged above the guide sleeve, and a cross section of the support member is gradually reduced from bottom to top; and
the second plate is provided with a sleeve, the sleeve is sleeved around an outer side of the support member, and a contour of an inner surface of the sleeve is adapted to an outer contour of the support member.

10. The lawn mowing apparatus according to claim 9, **characterized in that** the support member and the guide sleeve are in an integrated structure.

11. The lawn mowing apparatus according to claim 9, **characterized in that** an outer surface of the support member has any one of the following shapes: a cone, a truncated cone, a pyramid, or a truncated pyramid.

12. The lawn mowing apparatus according to claim 9, **characterized in that** an angle between an outer surface of the support member and a bottom plane of the support member ranges from 30 degrees to 70 degrees.

13. The lawn mowing apparatus according to claim 9, **characterized in that** a top of the support member has a step portion upwardly extending, and the inner surface of the sleeve has an extending structure adapted to the step portion.

14. The lawn mowing apparatus according to claim 1, **characterized in that** the reset member is an elastic member, one end of the elastic member is coupled to the first plate, the other end of the elastic member is coupled to the second plate, and the elastic member is configured to enable the second plate to reset after a movement.

15. A robotic lawn mower, **characterized by** comprising an autonomous moving apparatus and the lawn mowing apparatus according to any one of claims 1 to 11, wherein the lawn mowing apparatus is arranged to the autonomous moving apparatus, and is capable of completing a mowing operation in a preset area when driven by the autonomous moving apparatus.
